# NOUVEAU FASCICULE DE BREVET EUROPEEN

(11) **EP 0 477 352 B2**
(45) Date de publication et mention de la décision concernant l'opposition: **09.02.2000**
(45) Mention de la délivrance du brevet: 12.10.1994
(21) Numéro de dépôt: 91908604.1
(22) Date de dépôt: 10.04.1991
(51) Int. Cl.: B08B 9/20, B08B 101/08

(54) **PINCE DE PREHENSION ET MACHINE DE TRAITEMENT D'OBJETS, NOTAMMENT DE BOUTEILLES, AINSI EQUIPEE**
GREIFKLEMME UND DAMIT AUSGERÜSTETE BEHANDLUNGSMASCHINE FÜR GEGENSTÄNDE, INSBESONDERE FLASCHEN
GRIPPING CLAMP AND MACHINE FOR TREATING OBJECTS, IN PARTICULAR BOTTLES, EQUIPPED WITH SAID GRIPPING CLAMP

(30) Priorité: 11.04.1990 FR 9004652
(43) Date de publication de la demande: 01.04.1992
(73) Titulaire: PERRIER, René, 07160 Le Cheylard (FR); ETS. PERRIER, 07160 Le Cheylard (FR)
(72) Inventeur: Perrier, René, F-07160 Le Cheylard (FR)
(74) Mandataire: Thibault, Jean-Marc
(86) Numéro de dépôt international: FR9100292
(87) Numéro de publication internationale: WO9115309

(56) Documents cités:
- FR-A- 2 469 227
- US-A- 1 575 185
- US-A- 1 625 930
- US-A- 1 958 846
- US-A- 4 886 635

## Description

La présente invention concerne une pince de préhension en particulier pour la préhension d'objets fragiles tels que des bouteilles, cette pince étant destinée à faire partie d'une machine de traitement de ces objets.

La présente invention concerne également une telle machine.

Pour saisir un objet dans une machine à l'aide d'une pince, la technique antérieure enseigne d'appliquer à cet objet, au moyen de la pince, une force de serrage suffisante pour que le poids de cet objet et les autres forces auquel il risque d'être soumis en raison de la manipulation, qui peuvent s'ajouter au poids, ne risquent pas d'écarter les mors de la pince et de provoquer la chute de l'objet. Si l'on désire accélérer les manipulations dans la machine, c'est-à-dire augmenter la cadence de la machine, les forces d'inertie dont chaque objet est le siège augmentent, et il faut donc augmenter la force de serrage des pinces. Or, une force de serrage importante met en danger les objets lorsque ceux-ci sont fragiles, par exemple lorsqu'il s'agit de bouteilles.

Le but de l'invention est ainsi de proposer une pince et une machine de traitement de bouteilles qui permettent de manipuler rapidement et de manière très fiable des objets fragiles et respectivement des bouteilles.

Le document US-A-1958846 décrit une machine de traitement de bouteille et une pince pour saisir les bouteilles à cet effet. Les moyens de transmission reliant les moyens d'actionnement aux mors de la pince comprennent un moyen formant tenon mobile le long d'au moins un bord incliné formant rampe, le tenon et le bord appartenant l'un au mors mobile et l'autre aux moyens d'actionnement.

Le mors mobile est ramené vers le mors fixe grâce à un ressort de rappel qui fournit aussi la force de serrage de la pince. Néanmoins ce dispositif ne résout pas le problème ci-dessus car la force de serrage dépend du ressort choisi.

Le document US-A-1625930 décrit une boîte destinée à contenir des bouteilles à nettoyer. La boîte possède en partie supérieure deux volets mobiles rappelés par une ressort vers le fond de la boîte et servant à maintenir les bouteilles dans la boîte lorsque l'ensemble est placé la tête en bas. Les volets ne restent fermés que si les forces s'exerçant sur eux ne dépassent pas la force du ressort.

Par ailleurs, il est connu par le brevet **US-A-1 575 185,** une pince comprenant deux mors déplaçables l'un par rapport à l'autre, entre une position de relâchement et une position de préhension. Cette pince comporte, en tant que moyen d'actionnement, un vérin présentant un piston dont la tige est équipée d'une barre transversale agissant sur des moyens de transmission à tenons et à rampes. Un tenon est monté à chaque extrémité de la barre d'actionnement et se trouve engagé dans une rainure formant rampe inclinée par rapport à la direction de déplacement de la tige d'actionnement.

Les mors sont montés pivotants sur un support de tête monté coulissant sur une douille de guidage. Le support est maintenu en appui par l'intermédiaire d'un ressort, sur une bague fixée sur l'extrémité inférieure de la douille.

Pour saisir un objet, de l'air est injecté dans la chambre inférieure du vérin entraînant la remontée du piston et de la tige. Le déplacement des tenons sur les rampes inclinées conduit au rapprochement des mors et à la préhension d'un objet. La position limite de rapprochement des mors est donnée par la mise en butée des tenons sur le fond des rainures.

Le mouvement ascendant de la tige se poursuit lorsque les tenons se trouvent en position de butée sur le fond des rainures, c'est-à-dire en position de préhension de la bouteille. La tige soulève l'équipage fixe formé par la traverse et le support à l'encontre du ressort de rappel. La pince se trouve donc soulevée et peut être déplacée latéralement par le vérin.

L'alimentation en air de la chambre supérieure du vérin entraîne le mouvement descendant du piston et de la tige. Le support est déplacé vers le bas sous l'action du ressort de rappel. Les mors sont toujours en position de préhension, puisqu'il n'y a pas de mouvement relatif entre la traverse d'actionnement et le support. Un tel mouvement de descente se poursuit jusqu'au moment où le support vient en appui contre la bague. Le déplacement descendant de la pince en position de préhension, est alors terminé. La poursuite de la course de la tige du piston conduit au déplacement relatif des tenons à l'intérieur des rainures permettant d'assurer l'ouverture des mors.

Il est connu, par ailleurs, par le brevet **US 4 886 635**, une pince pour des objets comprenant deux mors articulés sur un support pour être déplaçables l'un par rapport à l'autre entre une position de préhension et une position de relâchement. Les mors sont aménagés pour présenter une forme adaptée pour enserrer l'objet à saisir. Cette pince comporte également des moyens d'actionnement des mors de façon que ces derniers pivotent entre leurs positions de préhension et de relâchement. Ces moyens d'actionnement comportent, notamment, un coulisseau déplacé selon un axe de déplacement par l'intermédiaire d'un couple de vérins. La pince comporte également des moyens de transmission interposés fonctionnellement entre le coulisseau et les mors mobiles. Ces moyens de transmission comportent deux tenons portés par le coulisseau et mobiles chacun le long d'un bord incliné formant rampe aménagée sur chaque mors mobile. L'alimentation des vérins permet de déplacer le coulisseau et, par suite, les tenons entre une position de relâchement de l'objet par les mors et une position de préhension.

Les brevets **US 1 575 185** et **US 4 886 635** décrivent une pince dont l'action de serrage ne dépend pas d'un ressort de rappel. Toutefois, la force de serrage sur l'objet est indéterminée, dans la mesure où il n'existe pas de ressort de rappel permettant d'amener de manière certaine, les mors en contact avec l'objet à saisir. Par ailleurs, le problème reste entier en ce qui concerne le risque d'écartement des mors de la pince susceptible d'apparaître au cours de la manipulation de l'objet.

Conformément à l'invention, la pince de préhension est définie par la revendication 1.

Ainsi, même si la force de serrage appliquée à l'objet par les moyens d'actionnement est faible, l'objet ne peut pas se libérer de la pince puisque les moyens de transmission entre les moyens d'actionnement et les mors sont irréversibles, c'est-à-dire que les mors ne peuvent pas transmettre aux moyens d'actionnement un déplacement significatif, quelle que soit la force tendant à écarter ces mors.

Suivant le second objet de l'invention, la machine de traitement d'objets en particulier de bouteilles, comprenant au moins une pince pour saisir individuellement chaque objet, se distingue en ce que la pince est réalisée selon le premier objet.

D'autres particularités et avantages de l'invention ressortiront encore de la description ci-après d'un exemple non limitatif.

Aux dessins annexés :
- La figure 1 est une vue schématique de dessus d'une machine de traitement à carrousel rotatif selon l'invention ;
- la figure 2 est une vue schématique en coupe axiale de la machine selon la ligne II-II de la figure 1;
- la figure 3 est une vue en élévation, avec coupe partielle, d'un dispositif de traitement de la machine des figures 1 et 2, la bouteille étant en position dressée ;
- la figure 4 est une vue analogue à la figure 3 mais lorsque la bouteille subit une injection en position renversée ;
- la figure 5 est une vue de face du dispositif avec coupes partielles et arrachements ;
- la figure 6 est une vue de dessus de la pince, avec coupe des bras et des tenons, et dans deux positions différentes :
- la figure 7 est une vue en élévation latérale de la pince, dans deux positions différentes, avec coupes partielles et arrachements ; et
- les figures 8 et 9 sont des vues de dessus de la partie avant du dispositif, en l'absence de bouteille et respectivement avec une bouteille en position renversée.

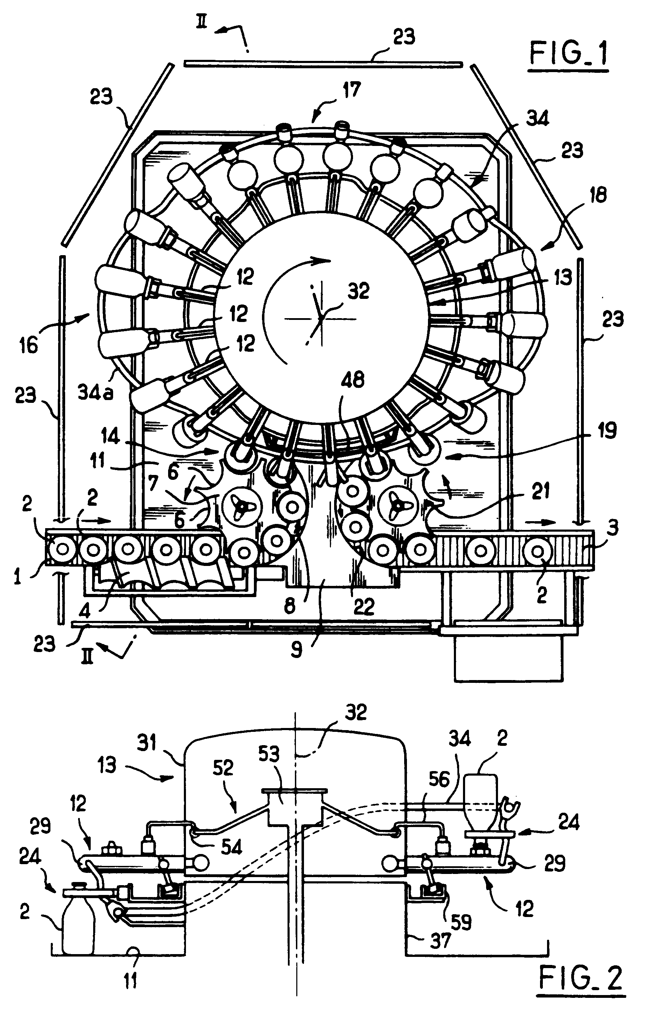

La machine représentée aux figures 1 et 2 est destinée à s'intercaler dans une chaîne de traitement de bouteilles. Elle comprend un convoyeur d'entrée 1 recevant les bouteilles 2 provenant de la partie amont de la chaîne et un convoyeur de sortie 3 qui achemine les bouteilles 2 vers la partie aval de la chaîne.

Le long du convoyeur d'entrée 1 est disposée une vis espaceuse 4,de type connu, qui donne aux bouteilles 2 successives un espacement et une vitesse de défilement prédéterminés de manière à synchroniser les bouteilles 2 avec des alvéoles 6 formés à la périphérie d'une étoile d'entrée 7. Les alvéoles 6 défilent au-dessus du convoyeur 1 et reçoivent les bouteilles successives 2 pour les propulser le long d'une trajectoire en demi-cercle définie par un bord de guidage 8 d'une plaque de guidage 9. Cette trajectoire en demi-cercle, le long de laquelle les bouteilles glissent par leur fond sur un plancher 11, fait passer les bouteilles 2 du convoyeur d'entrée 1 à des dispositifs de traitement de bouteilles 12 montés selon une répartition en couronne sur la paroi latérale extérieure d'un carrousel rotatif 13. Le long de la périphérie du carrousel 13, les dispositifs de traitement ont entre eux un espacement circonférentiel correspondant à l'intervalle entre bouteilles successives sur l'étoile 7.

Par la rotation du carrousel 13, les dispositifs de traitement 12 passent successivement par un poste 14 de préhension des bouteilles, un poste 16 de renversement des bouteilles, un poste 17 d'injection, un poste 18 de redressement des bouteilles et d'égouttage et un poste 19 de transfert des bouteilles traitées à une étoile de sortie 21 qui est analogue à l'étoile d'entrée 7 et fait passer les bouteilles traitées du poste de transfert 19 au convoyeur de sortie 3 selon une trajectoire en demi-cercle le long de laquelle les bouteilles glissent par leur fond sur le plancher 11 et suivent un autre bord courbe de guidage 22 de la plaque 9.

De préférence, les convoyeurs de sortie 2 et 3 sont constitués physiquement par un seul et même convoyeur au-dessus duquel est fixée la plaque 9.

La machine est protégée et insonorisée par des panneaux périphériques 23 dont certains au moins sont transparents et/ou peuvent s'ouvrir pour permettre l'entretien et les inspections détaillées.

Comme le montrent les figures 2 à 4, chaque dispositif de traitement 12 comprend une pince 24 qui a pour fonction de saisir par le goulot la bouteille 2 qui se présente à elle au poste de préhension, puis de manipuler la bouteille au cours des opérations de renversement et de redressement, et enfin de relâcher la bouteille au poste de transfert 19.

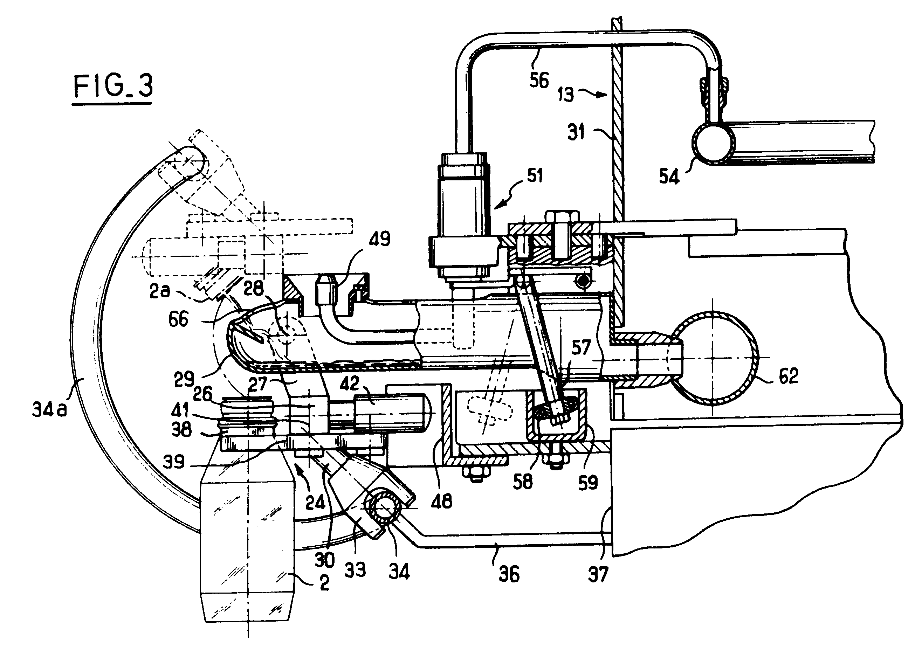

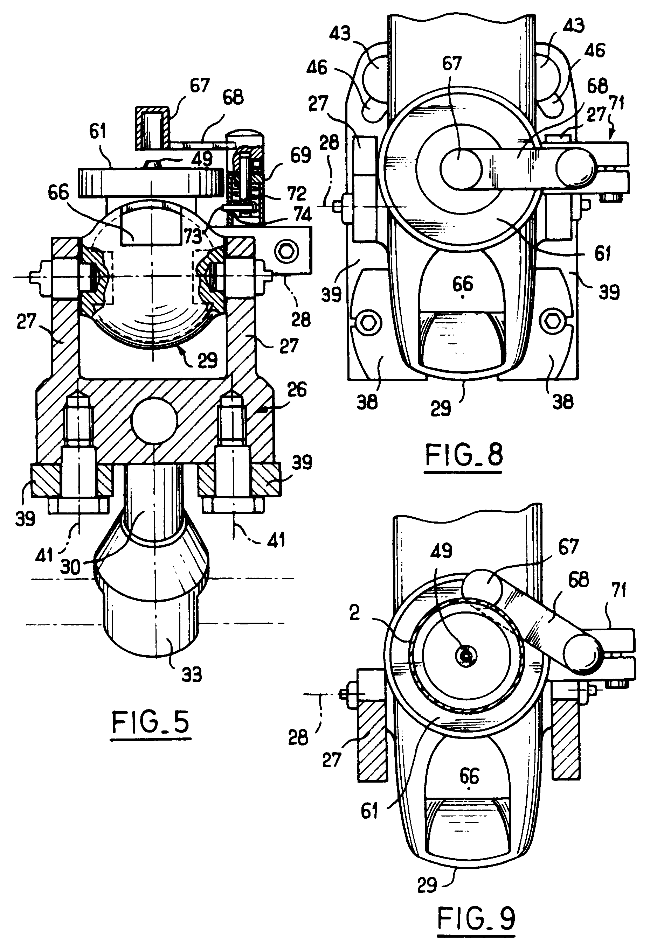

Chaque pince de préhension comporte ainsi un corps de pince 26 (figures 5 à 7) en forme de chape comprenant deux bras 27 articulés selon un axe commun 28 sensiblement horizontal à deux côtés opposés d'un corps 29 du dispositif de traitement. Le corps 29 est fixé au bâti rotatif 31 du carrousel (figures 2 et 3) et il est allongé radialement vers l'extérieur à partir du bâti rotatif 21 par rapport à l'axe de rotation sensiblement vertical 32 du carrousel 13. L'axe 28 est situé au voisinage de l'extrémité radialement extérieure du corps 29. L'axe 28 est appelé axe de renversement car c'est autour de cet axe que les bouteilles 2 pivotent pour leurs mouvements de renversement et de redressement. A cet effet, le corps de pince 26 porte un doigt 30 terminé par une fourchette 33 réalisée de préférence en matière plastique à faible coefficient de frottement et bonne résistance à l'usure. Dans la fourchette 33 est engagée une barre de commande de mouvement 34. Comme le montre la figure 1, la barre de commande de mouvement 34 s'étend autour du carrousel 13 et, comme le montre la figure 3, elle est fixée par exemple par des pattes 36, au bâti fixe 37 qui est situé sous le bâti rotatif 31 et supporte ce dernier en rotation.

Dans la représentation de la figure 3, la rampe de commande de mouvement 34 est vue comme si, à partir du plan de coupe de la figure 3, la direction du regard de l'observateur était non pas une droite perpendiculaire au plan de la figure mais une courbe centrée sur l'axe de rotation du carrousel. C'est ainsi que la partie 34a de la rampe 34 qui commande le mouvement de renversement des bouteilles 2, et qui est en réalité une hélice à axe circulaire, apparaît sur la figure 3 comme étant un demi-cercle centré sur l'axe de renversement 28.

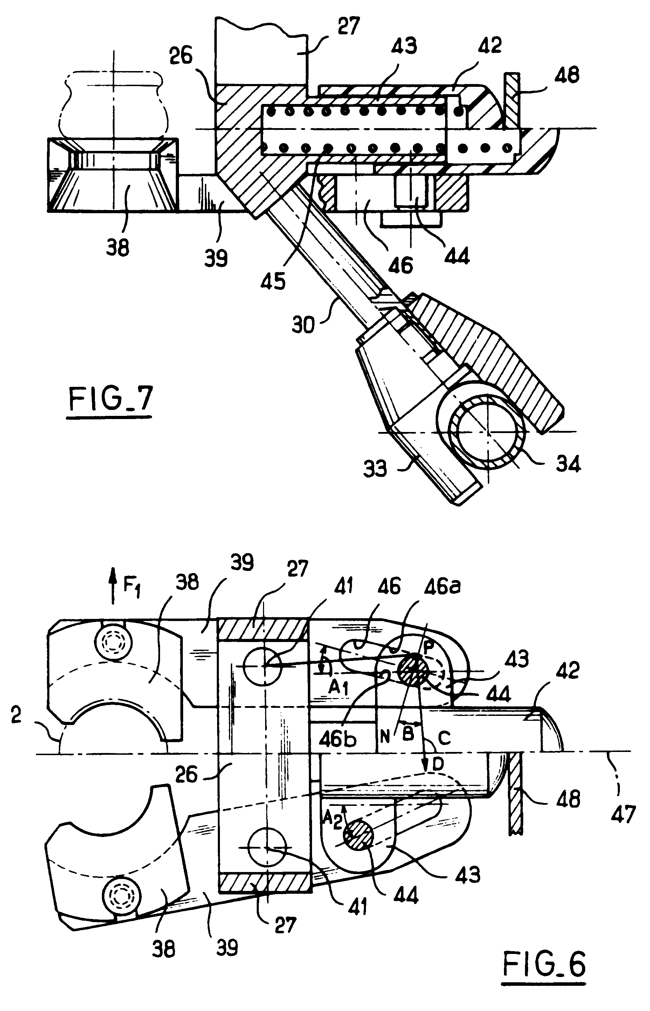

Comme le montre la figure 6, la pince 24 comprend deux mors 38 en matière plastique fixés chacun à une branche rigide 39. Les deux branches 39 sont articulées au corps 26 selon deux axes 41 parallèles entre eux et perpendiculaires à l'axe de renversement 28. Les mors 38 sont ainsi mobiles entre une position de préhension (partie supérieure de la figure 6), dans laquelle ils sont relativement proches l'un de l'autre et peuvent retenir entre eux le goulot d'une bouteille, et une position de relâchement (partie basse de la figure 6), dans laquelle ils sont relativement éloignés l'un de l'autre et permettent au goulot d'une bouteille de s'engager entre eux en provenance de l'étoile d'entrée 7 ou de se dégager d'eux pour être capté par l'étoile de sortie 21.

La pince comprend en outre un coulisseau d'actionnement 42 constitué par un chapeau en matière plastique monté coulissant sur un embout cylindrique 43 du corps de pince 26. Le chapeau 42 porte latéralement deux oreilles opposées 43 qui portent elles-mêmes rigidement chacune un tenon 44 s'étendant parallèlement aux axes 41. Chacun des tenons 44 est engagé dans une rainure 46 de l'une des branches 39. Chaque rainure 46 a des bords longitudinaux opposés 46a et 46b qui sont parallèles, rectilignes, et inclinés par rapport à l'axe 47 de déplacement du coulisseau d'actionnement 42. Les branches 39, et en particulier les mors 38, axes 41 et rainures 46 sont disposés symétriquement par rapport à l'axe 47. Ainsi, les bords 46a et 46b des rainures inclinées 46 forment rampe d'actionnement des mors 38 par les tenons 44 lorsque le coulisseau 42 se déplace selon son axe 47, de façon que les mors 38 pivotent vers leur position de préhension et respectivement vers leur position de relâchement. Comme le montre la figure 6, l'inclinaison des rainures 46 par rapport à la direction 47 varie lors du pivotement des branches 39, mais reste toujours orientée dans le même sens. En d'autres termes, dans l'exemple représenté, on voit à la figure 6 que quelle que soit la position des mors 38 les rainures 46 convergent vers l'axe 47 en direction opposée aux mors 38.

Les deux systèmes à tenons 44 et rainures 46 constituent des moyens de transmission irréversibles entre le coulisseau 42 et les mors 38. Ceci signifie qu'il est impossible de déplacer le coulisseau 42 en exerçant un effort sur les mors 38. L'irréversibilité est particulièrement recherchée à l'égard de l'écartement des mors 38 à partir de la position de préhension représentée en haut de la figure 6. Un effort F1 exercé sur les mors 38 dans le sens de l'écartement à partir de la position de préhension fait naître un point d'appui P entre le bord 46a et le tenon 44 et tend à déplacer ce point P selon la direction D qui est circonférentielle par rapport à l'axe 41 de la branche 39. Pour assurer l'irréversibilité précitée l'angle B entre la direction D et la normale N au bord 46a issue du point P est un angle aigu de faible valeur alors que l'angle C entre la direction D et l'axe de déplacement 47 est voisin de 90°.

Dans l'exemple représenté, les moyens de transmission sont irréversibles dans toutes les positions des mors et à l'égard de leurs deux sens de mouvement.

C'est donc le coulisseau 42 qui commande les deux sens de mouvement des mors. Un ressort de rappel 45 (figure 7) est monté dans l'embout tubulaire 43 du corps de pince 26 et sollicite en permanence le coulisseau 42 vers une position saillante correspondant à la position de préhension des mors 38.

La machine de traitement comprend en outre une came 48 réalisée sous la forme d'un fer plat profilé (voir aussi figure 1) qui coopère avec l'extrémité libre du coulisseau 42 pour enfoncer le coulisseau 42 à l'encontre de l'action du ressort de rappel 45 lorsque les mors 38 doivent être déplacés de leur position de préhension à leur position de dégagement, comme représenté en bas de la figure 6.

Comme le montre la figure 1, la came 48 n'est présente que dans la région du pourtour du carrousel 13 dans laquelle les mors de pince de chaque dispositif de traitement doivent être déplacés de la position de préhension à la position de relâchement (poste de transfert 19), maintenus dans la position de relâchement (passage du poste de transfert au poste de préhension), puis ramenés en position de préhension (poste de préhension 14). Le long du reste du pourtour du carrousel 13, comme représenté également en haut de la figure 6, le ressort de rappel 45 maintient le coulisseau 42 dans la position dans laquelle les mors 38 sont appuyés contre le goulot 2 d'une bouteille en cours de traitement. Le ressort 45 n'a pas besoin d'être très puissant : il suffit qu'il soit capable d'amener avec certitude les mors 38 en contact avec le goulot 2, sans nécessairement exercer de serrage sur le goulot de la bouteille 2 : en effet, grâce à l'irréversibilité des moyens de transmission 44, 46, la bouteille 2 ne peut, sous l'action de son propre poids ou de son inertie lors des manipulations, provoquer l'écartement mutuel des mors 38 ni se dégager des mors 38.

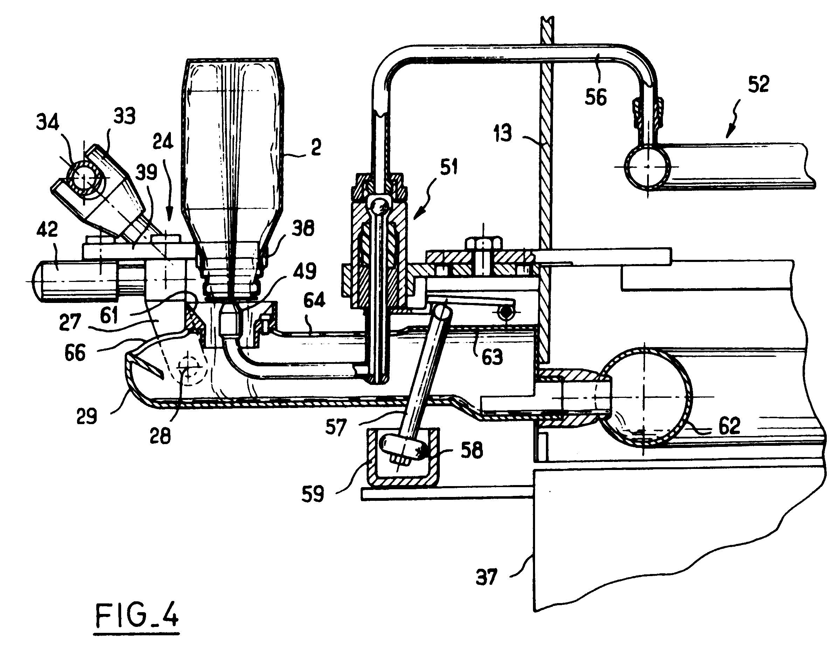

Ainsi, comme représenté à la figure 3, chaque pince 24 est capable de saisir une bouteille 2 en position dressée sous le corps 29 et de la faire pivoter de 180° autour de l'extrémité libre du corps 29 sous la commande de la barre de commande 34 pour amener la bouteille en une position renversée (figure 4) dans laquelle son goulot se trouve juste au-dessus d'une buse d'injection de fluide 49. La buse 49 est reliée par l'intermédiaire d'une vanne 51 fixée au corps 29, à un dispositif d'alimentation sous pression 52 installé à l'intérieur du carrousel 13 et qui peut comprendre par exemple une pompe 53 (figure 2) débitant dans une conduite annulaire 54 à laquelle sont reliés tous les raccordements 56 aux vannes 51 de tous les dispositifs de traitement 12 de la machine.

Chaque vanne 51 est commandée par un levier 57 qui est mobile entre une position de fermeture de la vanne, représentée à la figure 3, et une position d'ouverture de la vanne représentée à la figure 4. Le levier porte à son extrémité un galet 58 qui est engagé dans un rail de commande 59, en forme de U, qui est fixé au bâti fixe 37 de la machine et s'étend autour de ce dernier, comme cela est visible à la figure 1. Le rail de commande 59 est circulaire centré sur l'axe 32 du carrousel rotatif sauf le long du poste d'injection 17, de manière à faire passer chaque vanne 51 en position d'ouverture au poste d'injection 17 et à la maintenir en position fermée le long de tous les autres postes de la machine de traitement.

Par conséquent, lorsqu'une bouteille 2 est au poste d'injection, comme cela est représenté à la figure 4, la buse 49 envoie un jet de fluide à l'intérieur de la bouteille 2 renversée, à travers son goulot. Ce fluide frappe la paroi intérieure de la bouteille 2 et ruisselle le long de celle-ci avant de quitter la bouteille 2 à travers le goulot de cette dernière.

Le fluide qui s'écoule ainsi est recueilli à travers une goulotte 61 qui se trouve juste en-dessous du goulot de la bouteille 2 et qui entoure la buse 49 avec un certain écartement radial entre la paroi extérieure de la buse 49 et la paroi intérieure de la goulotte 61. L'ouverture définie par la goulotte 61 donne accès à l'intérieur du corps 29 lequel constitue un réceptacle individuel pour la collecte du fluide retombant de la bouteille 2.

Par l'expression "réceptacle individuel" on entend désigner un réceptacle de relativement petite taille affecté à un seul dispositif de traitement et tournant avec le carrousel 13 pour rester sous le goulot des bouteilles 2 en cours de traitement, notamment le long du poste d'injection 17.

A son extrémité radialement intérieure, le réceptacle 29 communique avec un collecteur annulaire 62 monté dans le carrousel rotatif 13 pour recueillir en provenance de tous les réceptacles 29 le liquide retombant des bouteilles 2.

Dans l'exemple représenté, ce fluide est un liquide. Il peut s'agir d'un liquide de rinçage tel que de l'eau qui, à partir du collecteur 62 sera conduit à l'égout. Il peut encore s'agir d'un liquide d'enduction des bouteilles, de valeur pécuniaire relativement élevée, et qui, à partir du collecteur 62, sera conduit via un dispositif de filtration et de recyclage vers la pompe 53 (figure 2). De manière non représentée, le fluide injecté par la buse 49 peut être un gaz qu'on ne souhaite pas répandre en quantité importante dans l'atmosphère, auquel cas le collecteur 62 est relié à une source d'aspiration.

Le réceptacle 29 comporte une fermeture supérieure 63 dans laquelle sont ménagées, outre l'ouverture définie par la goulotte 61, une ouverture 64 dans laquelle est engagée la base de la vanne 51, et une ouverture de collecte d'égouttage 66. Cette dernière est aménagée dans l'extrémité radialement extérieure du réceptacle 29, c'est-à-dire l'extrémité du réceptacle 29 qui est entourée par la trajectoire de la pince 24 et de la bouteille 2 qu'elle porte entre les positions dressée et renversée de cette dernière. On a représenté en trait mixte à la figure 3 une position 2a prise par la bouteille 2 au cours de son trajet retour depuis la position renversée jusqu'à la position dressée le long du poste de redressement des bouteilles 18 de la figure 1. La position 2a, inclinée à moins de 90° par rapport à la position renversée, favorise l'égouttage de la bouteille suite à l'injection subie le long du poste d'injection et le réceptacle 29 recueille le produit de cet égouttage à travers l'ouverture 66.

Comme le montrent les figures 5, 8 et 9, un capuchon 67 est porté au-dessus de la goulotte 61 par un bras 68, lequel, à son extrémité opposée au capuchon 67, est supporté en rotation dans un palier 69 serré dans un collier 71 soudé sur l'un des côtés du corps-réceptacle 29. Le capuchon 67 est ainsi mobile entre la position représentée aux figures 5 et 8, dans laquelle il est situé juste au-dessus de la buse 49, et une position de dégagement de la buse 49 et de la goulotte 61, représentée à la figure 9.

Dans le palier 69 est monté un ressort hélicoïdal 72, fonctionnant à l'enroulement, qui rappelle le capuchon 67 vers la position dans laquelle il est situé au-dessus de la buse 49. Si une injection de liquide a lieu en l'absence de bouteilles 2, par exemple au début du fonctionnement de la machine, l'injection se fait à l'intérieur du capuchon, lequel est conformé de manière à renvoyer dans le réceptacle 29 par la goulotte 61 le fluide ainsi injecté. Quand une bouteille atteint la position renversée (figure 9) elle bute contre le capuchon 67 ou le bras 68 et repousse ceux-ci dans la position dégageant la goulotte 61 à l'encontre de l'effet du ressort de rappel 72. L'injection se fait donc dans la bouteille. Un ergot 73 est lié en rotation au capuchon 67 et au bras 68 à l'intérieur du palier 69 et circule dans une fente circonférentielle 74 du palier 69, les extrémités circonférentielles de cette fente formant butée limitant la course angulaire du capuchon 67 autour de l'axe défini par le palier 69.

On va maintenant exposer le fonctionnement de la machine de traitement :

Les bouteilles 2 acheminées par le convoyeur d'entrée 1 et convenablement espacées par la vis espaceuse 4 sont remises par l'étoile d'entrée 7 aux dispositifs de traitement 12 successifs. La came 48 commande la fermeture de chaque pince 24 au moment où l'étoile d'entrée 7 a placé une bouteille entre ses mors.

Après fermeture d'une pince, la barre de guidage 34 commande par sa région hélicoïdale 34a le renversement progressif de la bouteille 2 considérée, ce renversement s'achevant au début du poste d'injection 17, peu avant que le rail de commande 59 ne commande l'ouverture de la vanne 51 et par conséquent l'injection de fluide à travers la buse 49. Après l'injection, la bouteille est maintenue un certain temps en position renversée pour lui permettre de s'égoutter, puis la barre de commande 34 commande le redressement de la bouteille le long du poste de redressement 18 jusqu'à ce que la bouteille vienne se loger dans l'un des alvéoles de l'étoile de sortie 21, à la suite de quoi la came 48 commande l'ouverture de la pince pour permettre à la bouteille d'être conduite du poste de transfert 19 au convoyeur de sortie 3.

Bien entendu, l'invention n'est pas limitée à l'exemple décrit et représenté. Les rainures 46 de la pince, au lieu d'être rectilignes, pourraient avoir une courbure qui compense le pivotement des branches 39 autour de leurs axes 41 de façon que la région des rainures 46 dans laquelle se trouvent les tenons 44 ait toujours la même inclinaison par rapport à l'axe 47.

## Revendications

1. Pince de prehension, en particulier pour objets fragiles (**2**) et plus particulièrement pour bouteilles, destinée à faire partie d'une machine de traitement automatique comprenant
- au moins deux mors (**38**) articulés pour être déplaçables l'un par rapport à l'autre entre une position de préhension d'un objet fragile (**2**) et une position de relâchement dudit objet,
- des moyens d'actionnement (**42, 48**) des mors (**38**), de façon que ces derniers pivotent entre leurs positions de préhension et de relâchement, ces moyens d'actionnement comportant au moins un coulisseau (**42**) destiné à être déplacé selon un axe de déplacement (**47**),
- des moyens de transmission (**44, 46**) interposés fonctionnellement entre le coulisseau (**42**) et les mors mobiles (**38**) pour transmettre aux mors ses mouvements, entre la position de relâchement et la position de préhension, les moyens de transmission comprenant au moins un moyen formant tenon (**44**) mobile le long d'au moins un bord (**46a**) formant rampe inclinée par rapport à l'axe de déplacement (**47**) du coulisseau, le tenon et la rampe appartenant l'un au mors mobile (**38**) et l'autre au coulisseau (**42**), caractérisée en ce que :
- le coulisseau (**42**) est sollicité en permanence par un ressort de rappel (**45**) vers une position correspondant à la position de préhension de l'objet par les mors (**38**),
- les moyens de transmission (**44, 46**) sont adaptés de manière qu'un effort, exercé par l'objet dans le sens d'ouverture des mors à partir de la position de préhension, tend à déplacer un point d'appui (**P**) entre le tenon (**44**) et la rampe (**46a**) dans une direction (**D**) qui fait avec la normale (**N**) au bord (**46a**), un angle prédéterminé (**B**) tel que ces moyens de transmission sont irréversibles, de sorte qu'un tel effort ne peut provoquer l'écartement mutuel des mors (**38**) et le déplacement du coulisseau (**42**).

2. Pince selon la revendication 1, caractérisée en ce que chaque mors mobile (**38**) est articulé par rapport à un corps (**26**) de la pince.

3. Pince selon la revendication 1 ou 2, caractérisée en ce que le tenon (**44**) est mobile dans une rainure inclinée (**46**) formant rampe (**46a, 46b**).

4. Pince selon l'une des revendications 1 à 3, caractérisée en ce que les moyens à rampe comprennent une rampe (**46a, 46b**) pour chaque mors (**38**), les deux rampes étant inclinées l'une par rapport à l'autre, et le coulisseau (**42**) produit un mouvement de translation selon la direction (**47**) formant axe de symétrie pour les deux rampes l'une par rapport à l'autre.

5. Pince selon l'une des revendications 1 à 4, caractérisée en ce qu'il y a deux rainures (**46**) formant un angle l'une avec l'autre et fixées chacune à l'un des mors, qui sont tous deux mobiles, et en ce que deux tenons (**44**), coopérant chacun avec l'une des rainures, sont solidaires du coulisseau (**42**).

6. Pince selon l'une des revendications 4 ou 5, caractérisée en ce que les deux mors (**38**) sont articulés l'un par rapport à l'autre.

7. Pince selon la revendication 4 ou l'une des revendications qui en dépendent, caractérisée en ce que les deux rampes (**46a, 46b**) convergent vers l'axe (**47**) en direction opposée aux mors (**38**).

8. Machine de traitement d'objets, en particulier de bouteilles, comprenant au moins une pince (**24**) pour saisir individuellement chaque objet (**2**), cette pince étant conforme à l'une quelconque des revendications 1 à 7.

9. Machine selon la revendication 8, caractérisée en ce que les moyens d'actionnement (**42, 48**) de la pince comprennent un ressort (**45**) sollicitant les mors mobiles (**38**) vers leur position de préhension par l'intermédiaire des moyens de transmission (**44, 46**), et en ce que la machine comprend une came (**48**) par rapport à laquelle la pince (**24**) est mobile au cours d'un cycle de traitement, et qui agit sélectivement sur les moyens d'actionnement (**42**) pour faire passer le mors mobile (**38**) en position de relâchement ou pour permettre au ressort de le ramener en position de préhension.

10. Machine selon la revendication 9, caractérisée en ce que les moyens d'actionnement comprennent un coulisseau (**42**) relié aux deux mors (**38**), tous deux mobiles, par deux moyens (**44, 46**) à rampes (**46a, 46b**) irréversibles, la came (**48**) et le ressort (**45**) agissant sur le coulisseau (**42**).

## Claims

1. A gripper clamp, particularly for fragile objects (**2**) and more particularly for bottles, which is intended to form part of an automatic processing machine, comprising:
- at least two jaws (**38**) articulated so as to be movable relatively to one another between a gripping position for gripping a fragile object (**2**) and a release position for releasing said object;
- actuating means (**42, 48**) for the jaws (**38**), so that the latter may rotate between their gripping and release positions, such actuating means including at least one slide (**42**) intended to be moved along a displacement axis (**47**); and
- transmission means (**44, 46**) functionally interposed between the slide (**42**) and the movable jaw (**38**) so as to transmit to the jaw its movements between the release position and the gripping position, the transmission means comprising at least one stud-forming means (**44**) movable along at least one ramp-forming edge (**46a**) inclined relative to the displacement axis (**47**) of the slide, the stud and the ramp being associated one with the movable jaw (**38**) and the other with the slide (**42**), characterised in that:
- the slide (**42**) is permanently urged by a return spring (**45**) towards a position corresponding to the gripping position of the object by the jaws (**38**);
- the transmission means (**44, 46**) are adapted such that a force exerted by the object in the opening direction of the jaw from the gripping position tends to move a point of support (**P**) between the stud (**44**) and the ramp (**46a**) in a direction (**D**) which together with the normal (**N**) to the edge (**46a**) forms a predetermined angle (**B**) such that said transmission means are irreversible so that such a force cannot bring about the movement of the jaws (**38**) away from one another and the displacement of the slide (**42**).

2. A clamp according to claim 1, characterised in that each movable jaw (**38**) is articulated relatively to a body (**26**) of the clamp.

3. A clamp according to claim 1 or 2, characterised in that the stud (**44**) is movable in an inclined slot (**46**) which forms a ramp (**46a, 46b**).

4. A clamp according to one of claims 1 to 3, characterised in that the ramp means comprise a ramp (**46a, 46b**) for each jaw (**38**), the two ramps being inclined relatively to one another, and the slide (**42**) produces a translatory movement in a direction (**47**) forming an axis of symmetry for the two ramps relatively to one another.

5. A clamp according to one of claims 1 to 4, characterised in that there are two slots (**46**) forming an angle to one another and each fixed to one of the jaws, which are both movable, and in that two studs (**44**), each cooperating with one of the slots, are secured to slide (**42**).

6. A clamp according to claim 4 or 5, characterised in that the two jaws (**38**) are articulated relatively to one another.

7. A clamp according to claim 4 or one of the claims dependant thereon, characterised in that the two ramps (**46a, 46b**) converge towards the axis (**47**) in the opposite direction to the jaws (**38**).

8. A machine for processing objects, particularly bottles, comprising at least one clamp (**24**) for individually gripping each object (**2**), said clamp being in conformity with any one of claims 1 to 7.

9. A machine according to claim 8, characterised in that the clamp actuating means (**42, 48**) comprise a spring (**45**) urging the movable jaw (**38**) towards its gripping position with the aid of the transmission means (**44, 46**), and in that the machine is provided with a cam (**48**) in relation to which the clamp (**24**) is movable in the course of a processing cycle and which acts selectively on the actuating means (**42**) to cause the movable jaw (**38**) to pass to the release position or to enable the spring to bring it back to the gripping position.

10. A machine according to claim 9, characterised in that the actuating means comprise a slide (**42**) connected to the two jaws (**38**), both of which are movable, by two irreversible means (**44, 46**) having ramps (**46a, 46b**), the cam (**48**) and the spring (**45**) acting on the slide (**42**).

## Patentansprüche

1. Greifklemme, insbesondere für zerbrechliche Gegenstände (2), ganz besonders für Flaschen, als Teil einer automatischen Behandlungsmaschine, mit
- wenigstens zwei gelenkigen Backen (38) zum Verstellen relativ zueinander zwischen einer Stellung zum Klemmen eines zerbrechlichen Gegenstandes (2) und einer Stellung zur Freigabe des genannten Gegenstandes,
- Einrichtungen (42, 48) zum Betätigen der Backen (38) in der Weise, daß letztere zwischen ihren Klemm- und Freigabestellungen schwenken, wobei diese Betätigungseinrichtungen wenigstens einen Stößel (42) aufweisen, der in einer Verstellachse (47) verstellbar ist,
- Übertragungseinrichtungen (44, 46), die betriebsmäßig zwischen dem Stößel (42) und den beweglichen Backen (38) angeordnet sind, um seine Bewegungen auf die Backen zu übertragen, wobei die Übertragungseinrichtungen wenigstens ein einen Zapfen (44) bildendes Element aufweisen, das entlang wenigstens eines Randes (46a) beweglich ist, der eine gegen die Verstellachse (47) des Stößels geneigte Rampe bildet, wobei der Zapfen zur beweglichen Backe (38) und die Rampe zum Stößel (42) gehört,
dadurch gekennzeichnet, daß
- der Stößel (42) durch eine Rückstellfeder (45) ständig in eine Stellung gedrängt wird, die der Stellung zum Greifen des Gegenstandes durch die Backe (38) entspricht,
- die Übertragungseinrichtungen (44, 46) so ausgelegt sind, daß eine Kraft, die vom Gegenstand im Sinne der Öffnung der Backen aus der Klemmstellung heraus ausgeübt wird, dazu neigt, einen Stützpunkt (P) zwischen dem Zapfen (44) und der Rampe (46a) in eine Richtung (D) zu verlagern, die mit der Normalen (N) zum Rand (46a) einen vorbestimmten Winkel (B) bildet, derart, daß diese Übertragungseinrichtungen selbsthemmend sind, so daß eine derartige Kraft das gegenseitige Aufspreizen der Backen (38) und die Verstellung des Stößels (42) nicht hervorrufen kann.

2. Klemme nach Anspruch 1,
dadurch gekennzeichnet, daß jede bewegliche Backe (38) an ein Hauptteil (26) der Klemme angelenkt ist.

3. Klemme nach Anspruch 1 oder 2,
dadurch gekennzeichnet, daß der Zapfen (44) in einer eine Rampe (46a, 46b) bildenden schrägen Nut (46) beweglich ist.

4. Klemme nach einem der Ansprüche 1 bis 3,
dadurch gekennzeichnet, daß die Rampeneinrichtungen für jede Backe (38) eine Rampe (46a, 46b) aufweisen, wobei die beiden Rampen gegeneinander geneigt sind, und der Stößel (42) eine Parallelverschiebung in der Richtung (47) erzeugt, die eine Symmetrieachse für die beiden Rampen in bezug aufeinander bildet.

5. Klemme nach einem der Ansprüche 1 bis 4,
dadurch gekennzeichnet, daß zwei Nuten (46) vorgesehen sind, die miteinander einen Winkel bilden und je an einer der Backen angebracht sind, die beide beweglich sind, und daß zwei Zapfen (44), die je mit einer der Nuten zusammenwirken, mit dem Stößel(42) fest verbunden sind.

6. Klemme nach einem der Ansprüche 4 oder 5,
dadurch gekennzeichnet, daß die beiden Backen (38) im bezug aufeinander gelenkig beweglich sind.

7. Klemme nach Anspruch 4 oder nach einem der davon abhängigen Ansprüche,
dadurch gekennzeichnet, daß die beiden Rampen (46a, 46b) in der den Backen (38) entgegengesetzten Richtung zur Achse (47) hin zusammenlaufen.

8. Maschine zur Behandlung von Gegenständen, insbesondere von Flaschen, mit wenigstens einer Klemme (24) zum individuellen Greifen jedes Gegenstandes (2), wobei die Klemme einem beliebigen der Ansprüche 1 bis 7 entspricht.

9. Maschine nach Anspruch 8,
dadurch gekennzeichnet, daß die Betätigungseinrichtungen (42, 48) der Klemme eine Feder (45) aufweisen, welche die beweglichen Backen (38) über die Übertragungseinrichtungen (44, 46) in ihre Klemmstellung drängt, und daß die Maschine eine Steuerkurve (48) aufweist, relativ zu der die Klemme (24) während eines Behandlungszyklus beweglich ist, und die selektiv auf die Betätigungseinrichtungen (42) einwirkt, um die bewegliche Backe (38) in die Freigabestellung zu verstellen oder um es der Feder zu ermöglichen, sie in die Klemmstellung zurückzustellen.

10. Maschine nach Anspruch 9,
dadurch gekennzeichnet, daß die Betätigungseinrichtungen einen Stößel (42) aufweisen, der mit den beiden Backen (38), die beide beweglich sind, durch zwei selbsthemmende Einrichtungen (44, 46) mit Rampen (46a, 46b) verbunden ist, wobei die Steuerkurve (48) und die Feder (45) auf den Stößel (42) wirken.
